(19) Europäisches Patentamt
European Patent Office
Office européen des brevets

(11) EP 4 563 618 A1

(12) **EUROPEAN PATENT APPLICATION**
published in accordance with Art. 153(4) EPC

(43) Date of publication:
**04.06.2025 Bulletin 2025/23**

(21) Application number: **23846333.5**

(22) Date of filing: **20.07.2023**

(51) International Patent Classification (IPC):
***C08G 64/02*** (2006.01) ***C08G 63/672*** (2006.01)
***G02B 1/04*** (2006.01)

(52) Cooperative Patent Classification (CPC):
**C08G 63/672; C08G 64/02; G02B 1/04**

(86) International application number:
**PCT/JP2023/026497**

(87) International publication number:
**WO 2024/024602 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.07.2022 JP 2022118027**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
  **Tokyo 100-8324 (JP)**
- **NISHIMORI Katsushi**
  **Tokyo 125-8601 (JP)**
- **MOTEGI Atsushi**
  **Tokyo 125-8601 (JP)**
- **ISHIHARA Kentaro**
  **Tokyo 100-8324 (JP)**
- **WATANABE Takafumi**
  **Tokyo 125-8601 (JP)**
- **HARADA Yutaro**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **RESIN OBTAINED FROM CYCLIC DIOL COMPOUND, AND OPTICAL LENS CONTAINING SAME**

(57) The present invention can provide a resin that contains a constitutional unit (A) derived from a monomer represented by general formula (1) and that is a polycarbonate resin or a polyester carbonate resin.

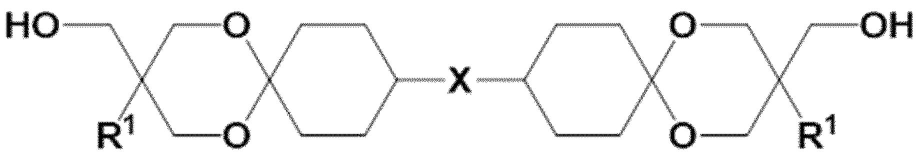

(1)

In the formula, each $R^1$ is independently a hydrogen atom, a C1-4 alkyl group, or a phenyl group. X is a direct bond or a divalent group that is represented by formula (Y).

EP 4 563 618 A1

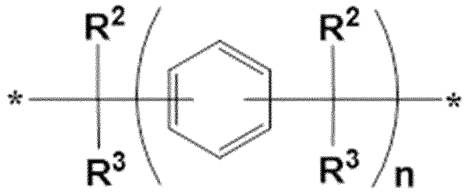 (Y)

In the formula, each $R^2$ and each $R^3$ is independently a hydrogen atom, an alkyl group, or an aryl group, or each $R^2$ and each $R^3$ may bind to one another to form a ring together with an adjacent carbon atom, and the ring may be substituted by an alkyl group. n is 0 or 1. * represents a binding position.

## Description

TECHNICAL FIELD

The present invention relates to a resin obtained from a cyclic diol compound, and an optical lens containing the same.

BACKGROUND ART

Various cyclic diol compounds are known as resin raw materials for polyester resins and polycarbonate resins. Examples of industrially available cyclic diol compounds include 1,4-cyclohexanedimethanol, 1,4-cyclohexanediol, and 2,2-bis(4-hydroxycyclohexyl)propane (hydrogenated bisphenol A). Various other cyclic diol compounds have been reported according to applications of resins to be produced.

For example, regarding polycarbonate resins for optical applications (e.g., optical lenses), for the purpose of improving optical characteristics of resins such as reduced coloration and transparency, a production method using a diol component containing a specific aromatic diol compound having a fluorene ring structure (Patent Document 1) has been reported, and a production method using a specific fluorene-containing dihydroxy compound and another dihydroxy compound at a specific ratio (Patent Document 2) has been reported.

However, characteristics of resins including polyester resins and polycarbonate resins vary depending on various application fields in which such resins are used, and the search of cyclic diol compounds that can satisfy resin characteristics desired in those fields has been promoted. In particular, in the case of using a resin for optical applications, a cyclic diol compound that can improve optical characteristics of the resin has been desired.

Patent Document 3 describes a diol compound having a diacetal structure (dispiro structure) of 1,4-cyclohexanedione. Patent Documents 4 and 5 describe that a diol compound having a dispiro structure is used as a raw material of resin, but do not describe that the compound can be used as a resin raw material of a polycarbonate resin or polyester carbonate resin.

PRIOR ART DOCUMENTS

PATENT DOCUMENTS

Patent Document 1: Japanese Laid-Open Patent Publication No. 2012-214803
Patent Document 2: Japanese Laid-Open Patent Publication No. 2013-001867
Patent Document 3: International Publication WO2018/074305 pamphlet
Patent Document 4: Japanese Laid-Open Patent Publication No. 2021-134151
Patent Document 5: Japanese Laid-Open Patent Publication No. 2019-014711

SUMMARY OF THE INVENTION

PROBLEMS TO BE SOLVED BY THE INVENTION

The present invention addresses the problem of providing a resin excellent in heat resistance and also excellent in optical characteristics such as the refractive index and the Abbe number, and an optical lens containing the same.

MEANS FOR SOLVING THE PROBLEMS

The present inventors diligently made researches in order to solve the above-described problem and found that a resin excellent in heat resistance, also excellent in optical characteristics such as the refractive index and the Abbe number, and further excellent in the partial dispersion ratio (θgF) and the extraordinary partial dispersion degree (ΔθgF), and an optical lens containing the same can be provided by using a cyclic diol compound having a diacetal structure represented by general formula (1), and thus the present invention was achieved.

Specifically, the present invention is as described below.

<1> A resin that comprises a structural unit (A) derived from a monomer represented by general formula (1) and that is a polycarbonate resin or a polyester carbonate resin:

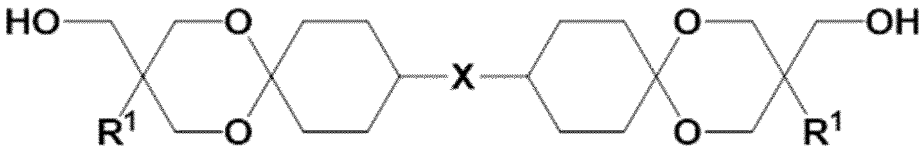

(1)

wherein in the formula:

each $R^1$ is independently a hydrogen atom, a C1-4 alkyl group, or a phenyl group; and
X is a direct bond (single bond) or a divalent group that is represented by formula (Y):

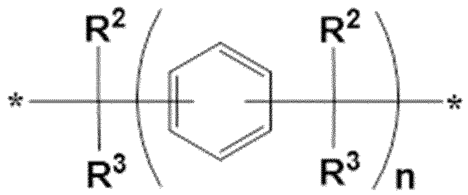

(Y)

wherein in the formula:

each $R^2$ and each $R^3$ are independently a hydrogen atom, an alkyl group, or an aryl group, or each $R^2$ and each $R^3$ may bind to one another to form a ring together with an adjacent carbon atom, and the ring may be substituted with an alkyl group;
n is 0 or 1; and

* represents a binding position.

<2> The resin according to item <1>, wherein in the divalent group represented by formula (Y):

when n is 0, each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group; and
when n is 1, each $R^2$ and each $R^3$ are independently a hydrogen atom or a C1-6 alkyl group.

<3> The resin according to item <2>, wherein in the divalent group represented by formula (Y):

n is 0; and
each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group.

<4> The resin according to item <3>, wherein:

each $R^1$ is independently a hydrogen atom, a methyl group, or an ethyl group; and
in the divalent group represented by formula (Y),
n is 0, and each $R^2$ and each $R^3$ are independently a hydrogen atom or a C1-4 alkyl group.

<5> The resin according to item <4>, wherein:

each $R^1$ is independently a hydrogen atom, a methyl group, or an ethyl group; and
X is a direct bond (single bond).

<6> The resin according to any one of items <1> to <5>, which comprises a structural unit (B) derived from a monomer represented by general formula (6) and/or a structural unit (C) derived from a monomer represented by general formula (7):

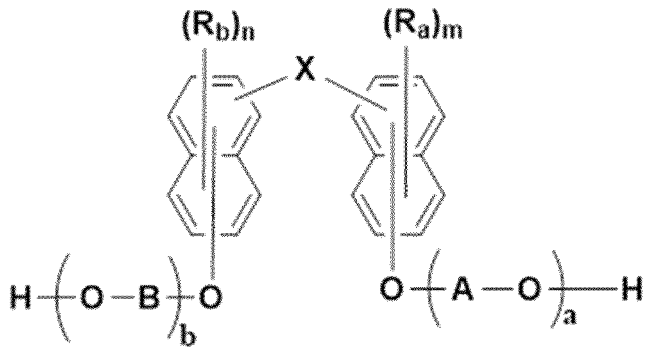

(6)

wherein in general formula (6):

$R_a$ and $R_b$ are each independently selected from the group consisting of a hydrogen atom; a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms, which contains at least one heterocyclic atom selected from O, N and S; a substituted or unsubstituted aryloxy group having 6 to 20 carbon atoms; and $-C \equiv C-R_h$;

$R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S;

X represents a single bond or a substituted or unsubstituted fluorene group;

A and B each independently represent a substituted or unsubstituted alkylene group having 1 to 5 carbon atoms;

m and n each independently represent an integer of 0 to 6; and

a and b each independently represent an integer of 0 to 10,

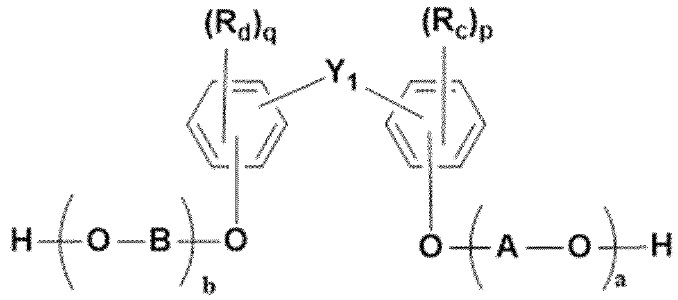

(7)

wherein in general formula (7):

$R_c$ and $R_d$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

$Y_1$ represents a single bond, a substituted or unsubstituted fluorene group, or any one of structural formulae represented by formulae (8) to (14):

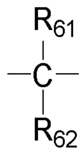

(8)

$-S-$

(9)

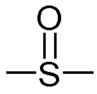

(10)

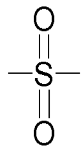

(11)

$-(CH_2)_r-$

(12)

$-O-$

(13)

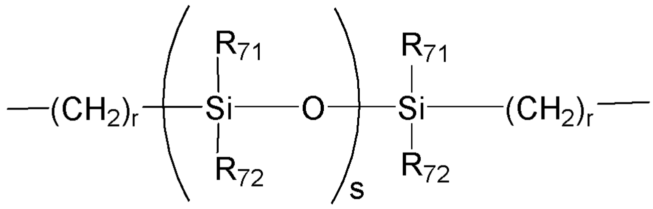

(14)

wherein in formulae (8) to (14):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, bind to one another, and
r and s each independently represent an integer of 0 to 5000;

A and B each independently represent a substituted or unsubstituted alkylene group having 1 to 5 carbon atoms;
p and q each independently represent an integer of 0 to 4; and
a and b each independently represent an integer of 0 to 10.

<7> The resin according to any one of items <1> to <6>, from which a resin consisting of (consisting only of) the structural unit (A) derived from the monomer represented by general formula (1) and a structural unit derived from BPEF is excluded.
<8> A resin that comprises a structural unit (A) derived from a monomer represented by general formula (1A):

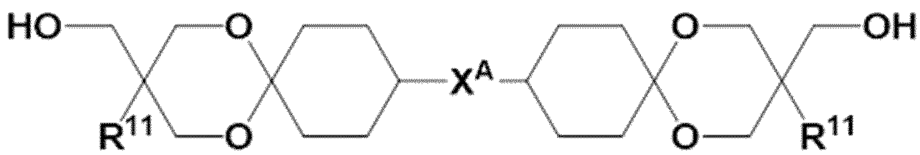

(1A)

wherein in the formula:

each $R^{11}$ is independently a hydrogen atom, a methyl group, or an ethyl group; and
$X^A$ is a direct bond (single bond) or a divalent group that is represented by formula (Y1):

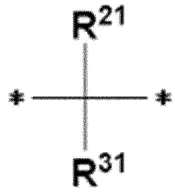

(Y1)

wherein in the formula:

one of $R^{21}$ and $R^{31}$ is a hydrogen atom and the other is a hydrogen atom or a methyl group, or $R^{21}$ and $R^{31}$ may bind to one another to form a 6-membered ring together with an adjacent carbon atom, and the ring may be substituted with 1 to 3 methyl groups; and

* represents a binding position.

<9> The resin according to item <8>, which is a polycarbonate resin, a polyester carbonate resin, or a polyester resin.
<10> The resin according to any one of items <1> to <9>, wherein the polystyrene-equivalent weight-average molecular weight (Mw) of the resin is 10,000 to 100,000.
<11> The resin according to any one of items <1> to <10>, wherein the refractive index (nD) of the resin is 1.500 to 1.650.
<12> The resin according to any one of items <1> to <11>, wherein the Abbe number (v) of the resin is 24.0 to 40.0.
<13> The resin according to any one of items <1> to <12>, wherein the glass transition temperature of the resin is 145 to 170°C.
<14> The resin according to any one of items <1> to <13>, wherein the partial dispersion ratio (θgF) of the resin is 0.621 to 0.700.
<15> The resin according to any one of items <1> to <14>, wherein the extraordinary partial dispersion degree (ΔθgF) of the resin is 0.025 to 0.100.
<16> An optical lens comprising the resin according to any one of items <1> to <15>.

ADVANTAGEOUS EFFECT OF THE INVENTION

According to the present invention, it is possible to provide a resin excellent in heat resistance, also excellent in optical characteristics such as the refractive index and the Abbe number, and further excellent in the partial dispersion ratio (θgF) and the extraordinary partial dispersion degree (ΔθgF), and an optical lens containing the same.

BRIEF DESCRIPTION OF THE DRAWINGS

FIG. 1 shows an IR spectrum of Compound 1 obtained in Production Example 1.
FIG. 2 shows a $^1$H-NMR spectrum of Compound 1 obtained in Production Example 1.

EMBODIMENTS FOR CARRYING OUT THE INVENTION

Hereinafter, the present invention will be described in detail by way of synthesis examples, working examples, etc., but the present invention is not limited thereto and can be arbitrarily changed and then practiced within a range not departing from the gist of the present invention.

<Resin>

One embodiment of the present invention is a resin that contains a structural unit (A) derived from a monomer represented by general formula (1) and that is a polycarbonate resin or a polyester carbonate resin:

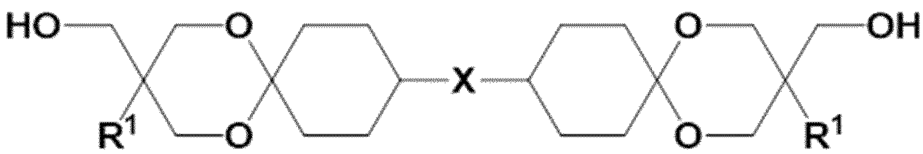

(1)

In the formula: each $R^1$ is independently a hydrogen atom, a C1-4 alkyl group, or a phenyl group; and X is a direct bond (single bond) or a divalent group that is represented by formula (Y):

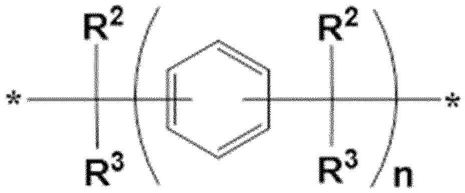

(Y)

In the formula: each $R^2$ and each $R^3$ are independently a hydrogen atom, an alkyl group, or an aryl group, or each $R^2$ and each $R^3$ may bind to one another to form a ring together with an adjacent carbon atom, and the ring may be

substituted with an alkyl group; n is 0 or 1; and * represents a binding position.

Each $R^1$ is preferably independently a C1-4 linear or branched alkyl group or a phenyl group. Examples of the C1-4 linear or branched alkyl group represented by $R^1$ include a methyl group, an ethyl group, an n-propyl group, an isopropyl group, an n-butyl group, an isobutyl group, a sec-butyl group, and a tert-butyl group. Among them, a methyl group, an ethyl group, an isobutyl group, or a tert-butyl group is preferred. More preferred is a methyl group or an ethyl group. Particularly preferred is a methyl group.

Examples of the alkyl groups represented by $R^2$ and $R^3$ include a C1-12 alkyl group, a C1-6 alkyl group, and particularly a C1-4 linear or branched alkyl group. Examples of the C1-4 linear or branched alkyl group include a methyl group, an ethyl group, an n-propyl group, an isopropyl group, an n-butyl group, an isobutyl group, a sec-butyl group, and a tert-butyl group. Among them, a methyl group, an ethyl group, an isobutyl group, or a tert-butyl group is preferred. More preferred is a methyl group or an ethyl group. Particularly preferred is a methyl group.

Examples of the aryl groups represented by $R^2$ and $R^3$ include a phenyl group, a toluyl group, a xylyl group, and a naphthyl group.

In the case where $R^2$ and $R^3$ bind to one another to form a ring together with an adjacent carbon atom, examples of the ring include a 3 to 12-membered ring (e.g., 3 to 12-membered cycloalkane), and preferably a 6 to 12-membered ring (e.g., 6 to 12-membered cycloalkane). Specific examples thereof include cyclopropane, cyclobutane, cyclopentane, cyclohexane, cycloheptane, cyclooctane, cyclononane, cyclodecane, cycloundecane, and cyclododecane. The ring may be substituted with 1 to 6 (preferably 1 to 3) alkyl groups. Examples of the alkyl groups include a C1-4 (particularly C1-3) linear or branched alkyl group, and preferred is a methyl group or an ethyl group. When there are a plurality of the alkyl groups, they may be the same or different from each other.

Preferably, n is 0. Specifically, the divalent group represented by formula (Y) is preferably a divalent group represented by formula (Y1):

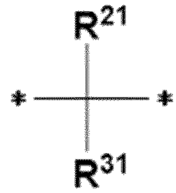

(Y1)

[In the formula: one of $R^{21}$ and $R^{31}$ is a hydrogen atom and the other is a hydrogen atom or a methyl group, or $R^{21}$ and $R^{31}$ may bind to one another to form a 6-membered ring together with an adjacent carbon atom, and the ring may be substituted with 1 to 3 methyl groups; and * represents a binding position.]

Examples of the divalent group represented by formula (Y) include divalent groups represented by formulae (Ya) to (Yc) below, and among them, a divalent group represented by formula (Yb) is preferred.

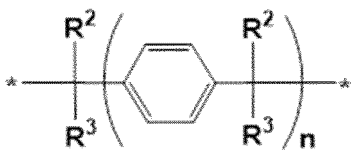

(Ya)

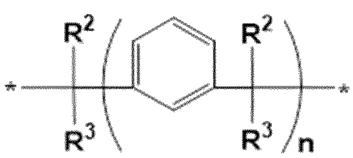

(Yb)

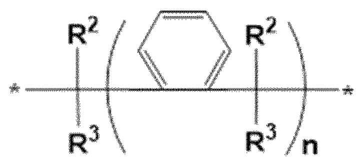

(Yc)

[In the formulae, $R^2$, $R^3$, n, and * are the same as above.]

Preferred examples of compounds represented by general formula (1) include a compound, wherein in the divalent group represented by formula (Y): when n is 0, each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group; and when n is 1, each $R^2$ and each $R^3$ are independently a hydrogen atom or a C1-6 alkyl group.

Preferred examples of compounds represented by general formula (1) further include a compound, wherein in the divalent group represented by formula (Y): n is 0; and each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group.

Preferred examples of compounds represented by general formula (1) further include a compound, wherein: each $R^1$ is independently a hydrogen atom, a methyl group, or an ethyl group; and in the divalent group represented by formula (Y), n is 0, and each $R^2$ and each $R^3$ are independently a hydrogen atom or a C1-4 alkyl group.

Preferred examples of compounds represented by general formula (1) further include a compound, wherein:

each $R^1$ is independently a hydrogen atom, a methyl group, or an ethyl group; and X is a direct bond (single bond).

Preferred examples of compounds represented by general formula (1) further include a compound represented by general formula (1A):

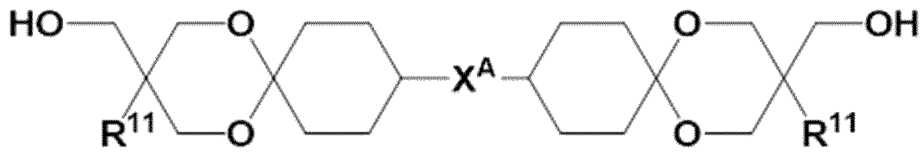

(1A)

[In the formula: each $R^{11}$ is independently a hydrogen atom, a methyl group, or an ethyl group; and $X^A$ is a direct bond (single bond) or a divalent group represented by formula (Y1).]

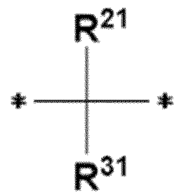

(Y1)

[In the formula: one of $R^{21}$ and $R^{31}$ is a hydrogen atom and the other is a hydrogen atom or a methyl group, or $R^{21}$ and $R^{31}$ may bind to one another to form a 6-membered ring together with an adjacent carbon atom, and the ring may be substituted with 1 to 3 methyl groups; and * represents a binding position.]

Preferably, each $R^{11}$ is independently a methyl group or an ethyl group.

Specific examples of compounds represented by general formula (1) include compounds (1a) to (1g) below. Among them, specific examples of compounds represented by formula (1A) include compounds (1a) to (1d) and (1g).

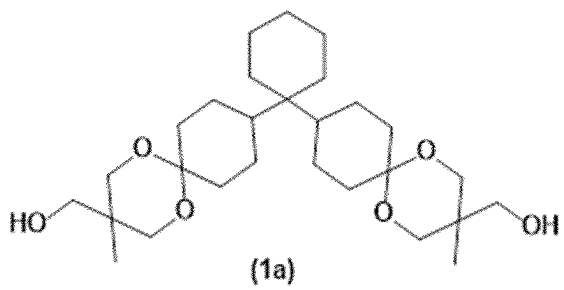

(1a)

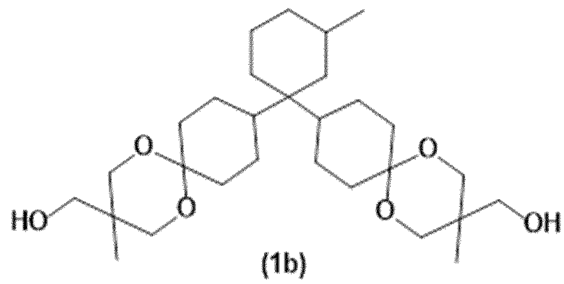

(1b)

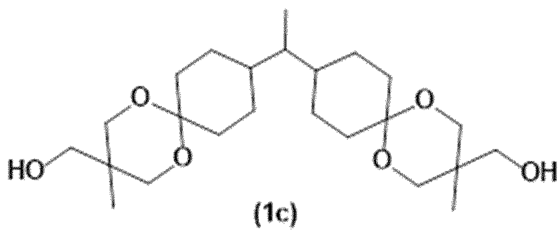

(1c)

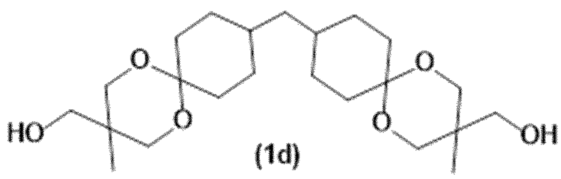

(1d)

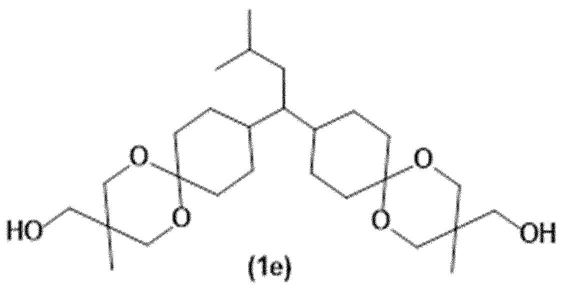

(1e)

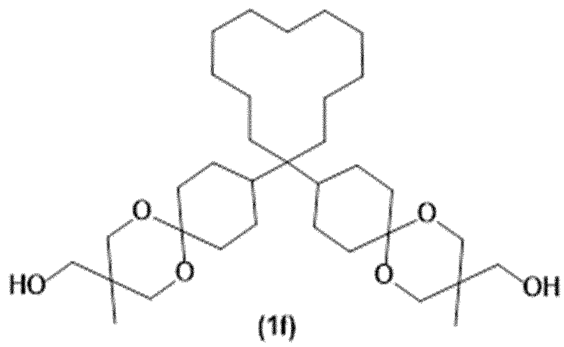

(1f)

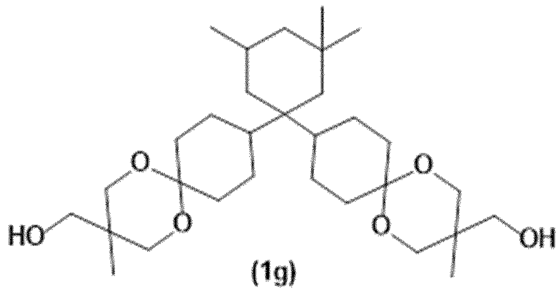

(1g)

The resin of the present invention means a resin having a repeating unit (structural unit) derived from a cyclic diol compound represented by general formula (1) (including a cyclic diol compound represented by general formula (1A); the same applies hereinafter). In other words, it means a resin containing a divalent repeating unit obtained by removing a hydrogen atom of a hydroxyl group from the cyclic diol compound represented by general formula (1).

The method for producing the compound (monomer) represented by general formula (1) is not particularly limited. For example, as shown in <Reaction Formula 1> below, the compound can be produced through a step of performing a reaction (acetalization reaction) between a compound represented by general formula (3) and a compound represented by general formula (4).

<Reaction Formula 1>

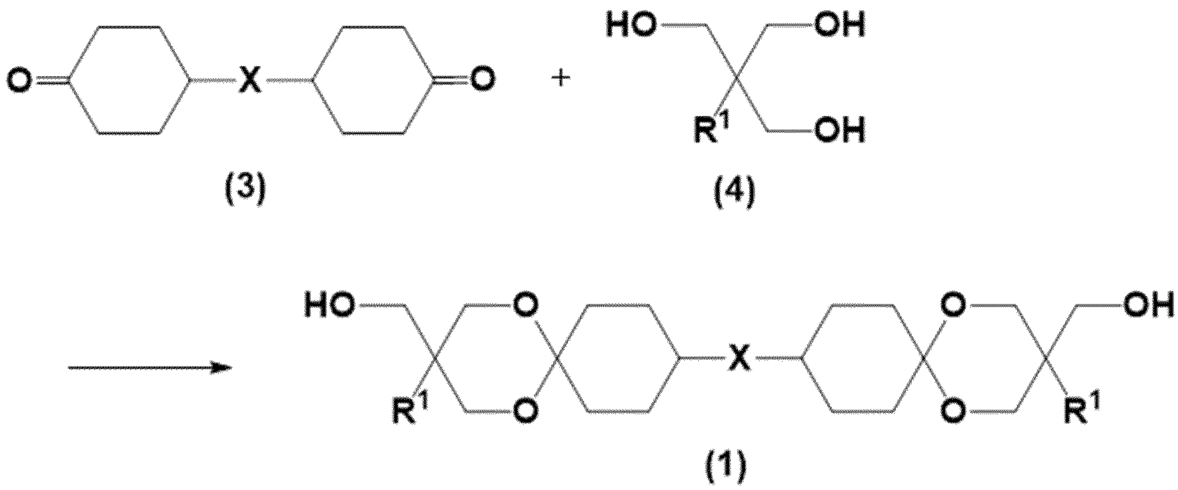

(3) (4) (1)

**[In** the formula, $R^1$ and X are the same as above.]

Specifically, the compound represented by general formula (1) can be produced by performing a reaction (acetalization reaction) between the compound represented by general formula (3) and the compound represented by general formula (4) in the presence of an acidic catalyst.

The reaction can usually be performed in a solvent (e.g., toluene). The reaction can be performed while heating the solvent to reflux and removing generated water by azeotroping it with the solvent. The acidic catalyst is not particularly limited as long as it has a catalytic action, and any publicly-known acidic catalyst can be used. Examples thereof include: mineral acids such as hydrochloric acid, sulfuric acid, nitric acid, and phosphoric acid; organic acids such as p-toluenesulfonic acid, methanesulfonic acid, ethanesulfonic acid, trifluoroacetic acid, and trifluoromethanesulfonic acid; solid acids such as cation exchange resin, zeolite, silica alumina, and heteropoly acids (e.g., phosphotungstic acid, phosphomolybdic acid, etc.); and various Lewis acids.

The amount of the compound represented by general formula (4) is usually about 0.5 to 3 mol, and preferably about 0.8 to 2 mol relative to 1 mol of the compound represented by general formula (3).

The compound represented by general formula (1A), which is included in the compound represented by general formula (1), can also be produced in the same manner as <Reaction Formula 1>. Specifically, it is as shown in <Reaction Formula 2> below.

<Reaction Formula 2>

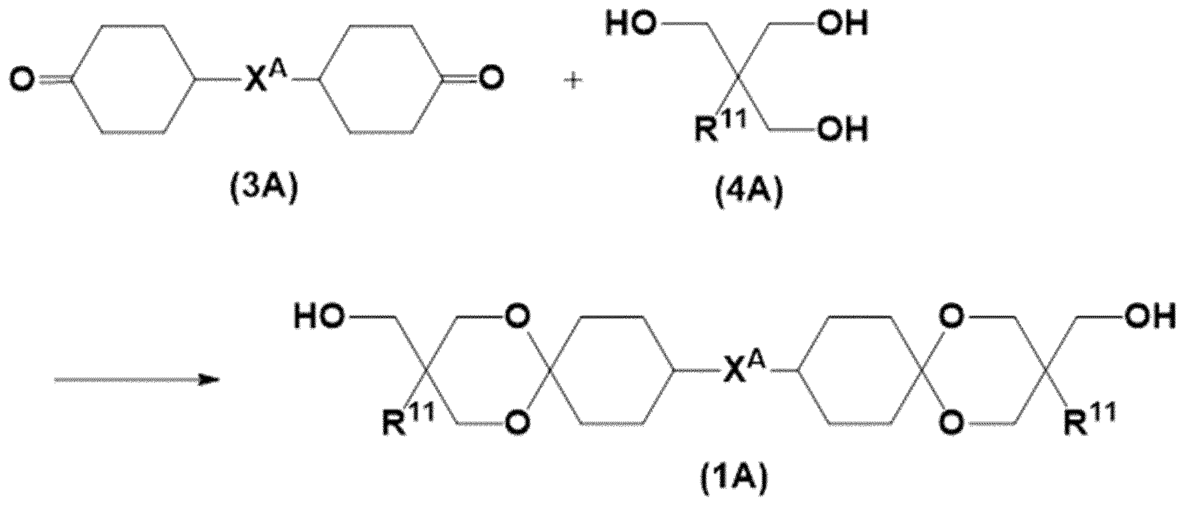

[In the formula, $R^{11}$ and $X^A$ are the same as above.]

The compound (cyclic diol compound) represented by general formula (1) is used as a raw material monomer for producing a resin, and is (co)polymerized solely or in combination with another monomer, thereby producing a resin containing a structural unit (structural unit (A)) represented by general formula (2).

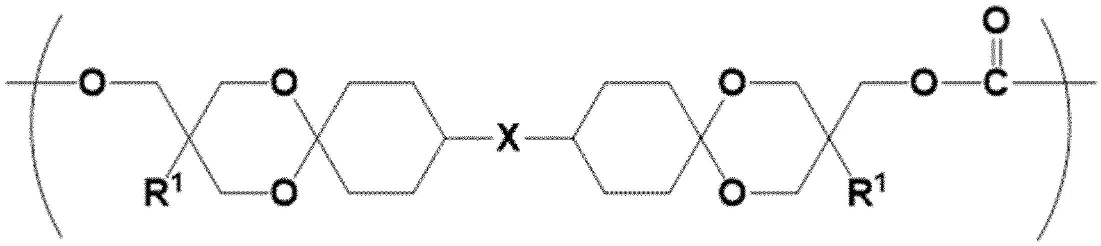

(2)

[In the formula, $R^1$ and X are the same as above.]

The resin containing the structural unit (A) derived from the monomer represented by general formula (1) is preferably a thermoplastic resin, more preferably a polycarbonate resin, a polyester carbonate resin, or a polyester resin, even more preferably a polycarbonate resin or a polyester carbonate resin, and particularly preferably a polycarbonate resin.

Specific examples and preferred examples of $R^1$ and X in general formula (2) are the same as those of $R^1$ and X in general formula (1) described above.

In the case of a polycarbonate resin containing the structural unit represented by general formula (2) (structural unit (A)), it can be produced by performing a (polymerization) reaction between a raw material monomer including the compound represented by general formula (1) and a carbonyl precursor compound.

As a raw material monomer for the polycarbonate resin, the compound represented by general formula (1) can be used solely. The polycarbonate resin obtained is a homopolymer which is obtained by performing a reaction between the compound represented by general formula (1) alone and the carbonyl precursor compound, and consists only of the structural unit represented by general formula (2).

In a raw material monomer for the polycarbonate resin, a dihydroxy compound that is generally used as a structural unit of polycarbonate resin may be contained in addition to the compound represented by general formula (1). Examples of the dihydroxy compound include an aliphatic dihydroxy compound and an aromatic dihydroxy compound.

That is, the polycarbonate resin may be a copolymer which contains a structural unit derived from a general dihydroxy compound in addition to the structural unit represented by general formula (2) derived from the compound represented by general formula (1). The copolymer having a plurality of types of structural units may be either a block copolymer or a random copolymer.

Examples of the aliphatic dihydroxy compound include various substances, and particularly include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

Examples of the aromatic dihydroxy compound include various substances, and particularly include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ketone, and bisphenoxyethanol fluorene. In addition, hydroquinone, resorcin, catechol, etc. are also included.

The ratio of the compound represented by general formula (1) in the raw material monomer to be used is not particularly limited, and is, for example, 1 mol% or more, preferably 1 to 80 mol%, more preferably 5 to 70 mol%, even more preferably 15 to 65 mol%, and particularly preferably 25 to 65 mol% relative to the total amount of the monomer. That is, the ratio of the structural unit represented by general formula (2) derived from the compound represented by general formula (1) in the polycarbonate resin is not particularly limited, and is, for example, 1 mol% or more, preferably 1 to 80 mol%, more preferably 5 to 70 mol%, even more preferably 15 to 65 mol%, and particularly preferably 25 to 65 mol% relative to all the structural units.

Examples of the carbonyl precursor compound include phosgene, triphosgene, and diphenyl carbonate.

Further, according to one embodiment of the present invention, the resin preferably contains a structural unit (B) derived from a monomer represented by general formula (6):

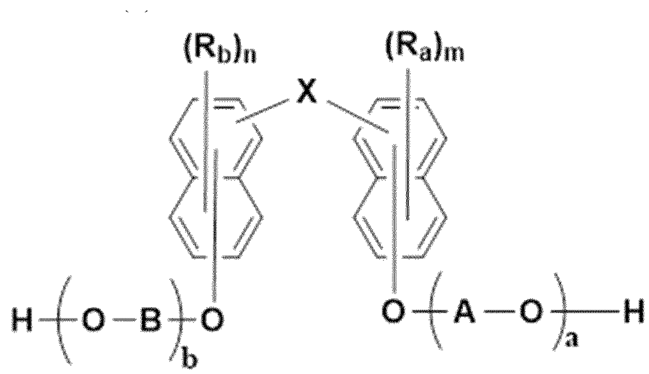

(6)

In general formula (6), $R_a$ and $R_b$ are each independently selected from the group consisting of a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms, which contains at least one heterocyclic atom selected from O, N and S; a substituted or unsubstituted aryloxy group having 6 to 20 carbon atoms; and $-C{\equiv}C-R_h$. $R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S.

$R_a$ and $R_b$ are preferably a hydrogen atom, a substituted or unsubstituted aryl group having 6 to 20 carbon atoms, or a substituted or unsubstituted heteroaryl group having 6 to 20 carbon atoms which contains at least one heterocyclic atom selected from O, N and S, more preferably a hydrogen atom or a substituted or unsubstituted aryl group having 6 to 20 carbon atoms, and even more preferably a hydrogen atom or a substituted or unsubstituted aryl group having 6 to 12 carbon atoms.

In general formula (6), X represents a single bond or a substituted or unsubstituted fluorene group. X is preferably a single bond or a substituted or unsubstituted fluorene group having a total carbon number of 12 to 20.

In general formula (6), A and B each independently represent a substituted or unsubstituted alkylene group having 1 to 5 carbon atoms, and preferably an alkylene group having 2 or 3 carbon atoms.

In general formula (6), m and n each independently represent an integer of 0 to 6, preferably an integer of 0 to 3, and more preferably 0 or 1.

In general formula (6), a and b each independently represent an integer of 0 to 10, preferably an integer of 1 to 3, and more preferably 1 or 2.

Specific examples of the structural unit (B) include structural units derived from 2,2'-bis(2-hydroxyethoxy)-1,1'-binaphthalene (BNE), DPBHBNA, etc.

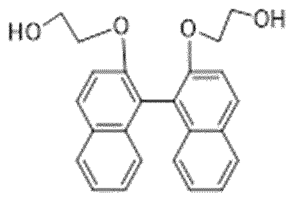 (BNE) 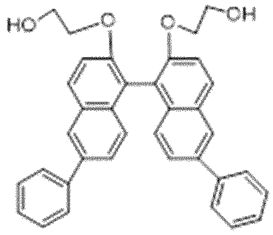 (DPBHBNA)

Further, according to one embodiment of the present invention, the resin preferably has a structural unit (C) derived from a monomer represented by general formula (7):

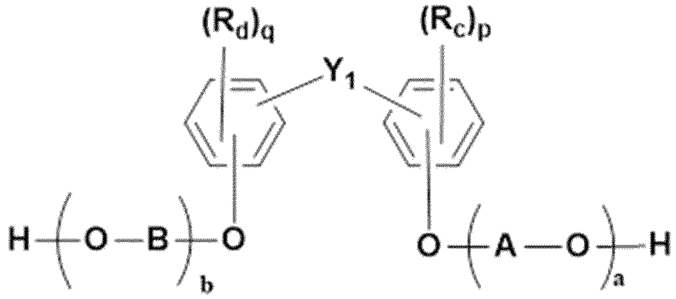

(7)

In general formula (7), $R_c$ and $R_a$ are each independently selected from the group consisting of a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms.

$R_c$ and $R_a$ are preferably a hydrogen atom, a substituted or unsubstituted aryl group having 6 to 20 carbon atoms, or a substituted or unsubstituted heteroaryl group having 6 to 20 carbon atoms which contains at least one heterocyclic atom selected from O, N and S, more preferably a hydrogen atom or a substituted or unsubstituted aryl group having 6 to 20 carbon atoms, and even more preferably a hydrogen atom or a substituted or unsubstituted aryl group having 6 to 12 carbon atoms.

In general formula (7), $Y_1$ represents a single bond, a substituted or unsubstituted fluorene group, or any one of structural formulae represented by formulae (8) to (14), and preferably a single bond or a structural formula represented by formula (8).

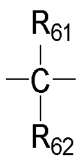 (8)

$-S-$ (9)

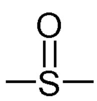 (10)

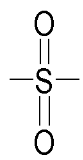 (11)

$-(CH_2)_r-$ (12)

$-O-$ (13)

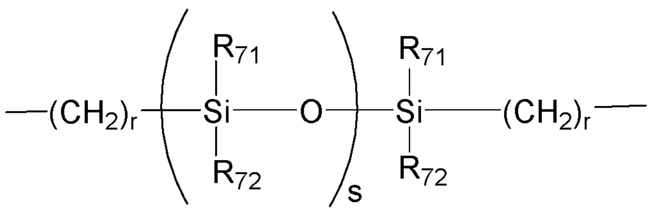

(14)

In formulae (8) to (14), $R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon

atoms, wherein $R_{61}$ and $R_{62}$, or $R_{71}$ and $R_{72}$, bind to one another.

In formulae (8) to (14), r and s each independently represent an integer of 0 to 5000. r is preferably an integer of 1 to 20, and more preferably an integer of 1 to 9. Further, s is preferably an integer of 1 to 5000, and more preferably an integer of 1 to 500.

In general formula (7) above, A and B each independently represent a substituted or unsubstituted alkylene group having 1 to 5 carbon atoms, and preferably an alkylene group having 2 or 3 carbon atoms. In general formula (7), p and q each independently represent an integer of 0 to 4, and preferably 0 or 1. Further, in general formula (7), a and b each independently represent an integer of 0 to 10, preferably an integer of 0 to 5, more preferably an integer of 0 to 2, and for example, 0 or 1.

Specific examples of the constituent unit (C) may include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), and TrisP-HAP (4,4',4"-ethylidenetrisphenol). Among these, the constituent units (C) are preferably those derived from BPEF or BNEF.

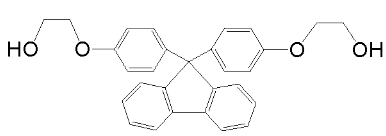
(BPEF)
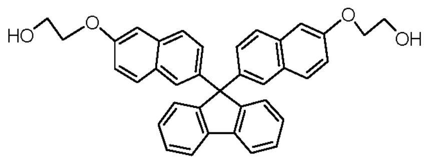
(BNEF)

The resin of one embodiment of the present invention essentially comprises the constituent unit (A). The thermoplastic resin of one embodiment of the present invention may also be a polymer that contains the constituent unit (B) and does not contain the constituent unit (C), a polymer that contains the constituent unit (C) and does not contain the constituent unit (B), a copolymer having the constituent unit (B) and the constituent unit (C), a mixture of a polymer having the constituent unit (B) and a polymer having the constituent unit (C), or a combination thereof. Examples of the polymer that contains the constituent unit (C) and does not contain the constituent unit (B) may include those having constituent units represented by the following formulae (I-1) to (I-3). Examples of the copolymer having the constituent unit (B) and the constituent unit (C) may include those having constituent units represented by formulae (II-1) to (II-4) as shown below.

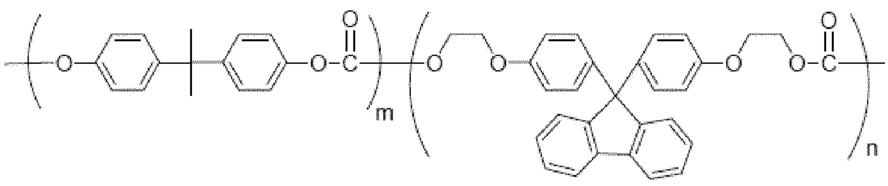
(I−1)

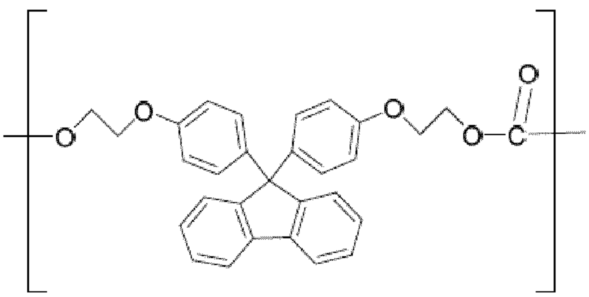
(I−2)

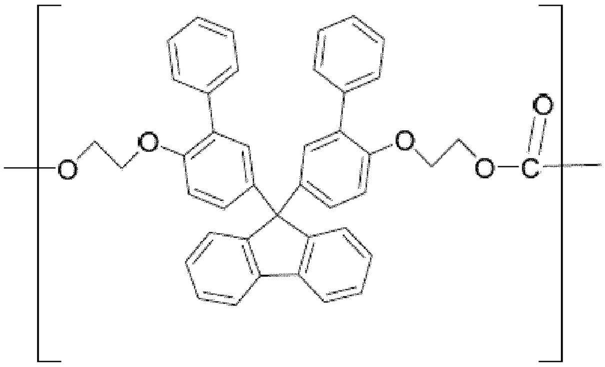

(I-3)

In the formula (I-1), m and n each represent an integer of 1 to 10, preferably an integer of 1 to 5, and more preferably 1; and
the number of repeating units of the formula (I-3) is an integer of 1 to 10, preferably an integer of 1 to 5, and more preferably 1.

Moreover, as a polymer having multiple types of constituent units, both a block copolymer, in which the values of m and n are large (for example, 100 or more), and a random copolymer, may be adopted. Of these, a random copolymer is preferable, and more preferably, a random copolymer, in which the values of m and n are 1, is used.

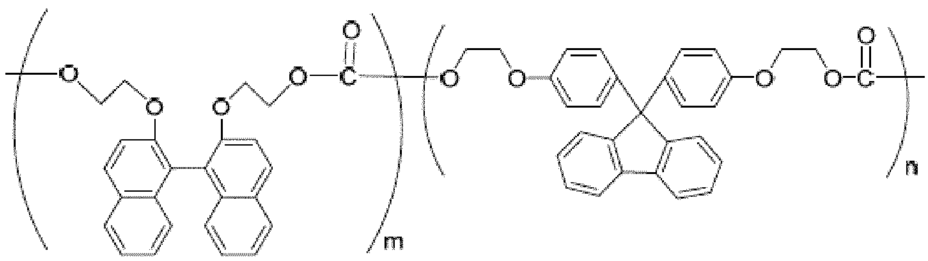

(II-1)

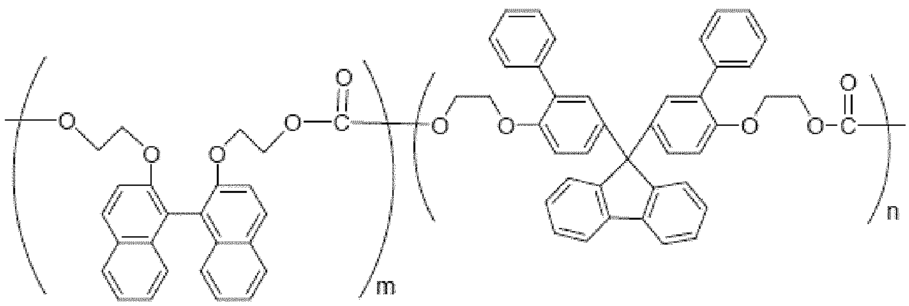

(II-2)

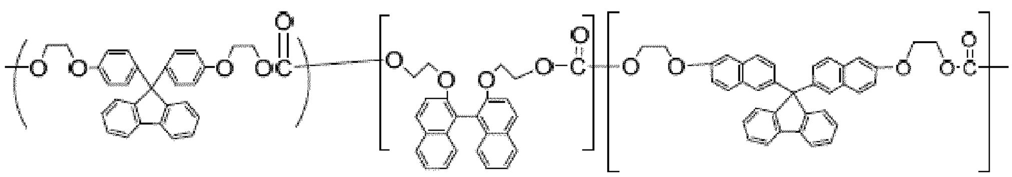

(II-3)

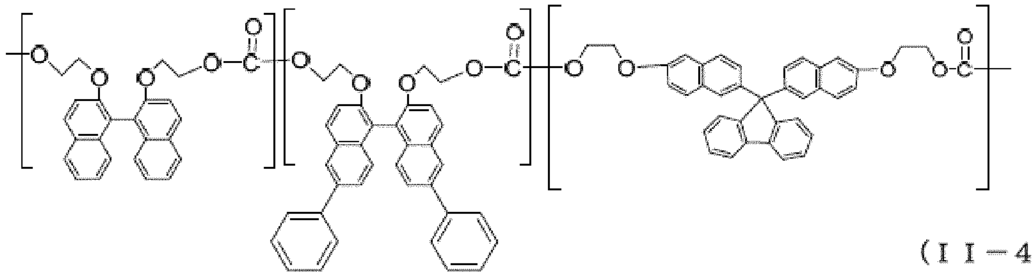

(II-4)

In the above formulae (II-1) to (II-4), m and n each independently represent an integer of 1 to 10, preferably an integer of 1 to 5, and more preferably 1.

Furthermore, as a polymer having multiple types of constituent units, both a block copolymer, in which the values of m and n are large (for example, 100 or more), and a random copolymer, may be adopted. Of these, a random copolymer is preferable, and more preferably, a random copolymer, in which the values of m and n are 1, is used.

In such a copolymer, the molar ratio between the constituent unit (B) and the constituent unit (C) is preferably 1 : 99 to 99 : 1, more preferably 10 : 90 to 90 : 10, further preferably 15 : 85 to 85 : 15, and particularly preferably 30 : 70 to 70 : 30. In addition, in the mixture, the mass ratio between a polymer having the constituent unit (B) and a polymer having the constituent unit (C) is preferably 1 : 99 to 99 : 1, more preferably 10 : 90 to 90 : 10, further preferably 15 : 85 to 85 : 15, and particularly preferably 30 : 70 to 70 : 30.

Also, the resin of one embodiment of the present invention preferably comprises a constituent unit derived from at least one monomer selected from the following monomer group.

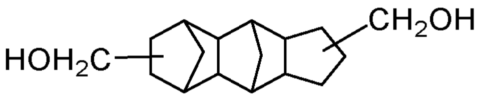
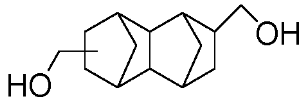

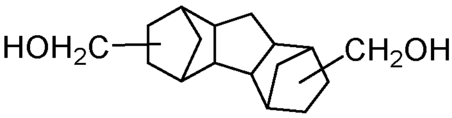
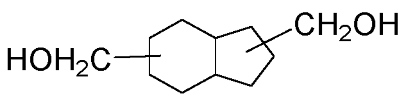

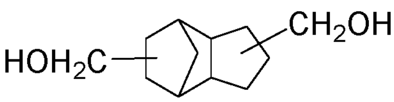
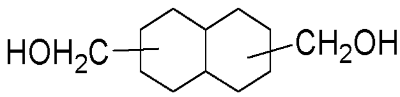

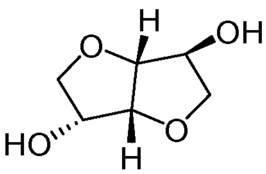
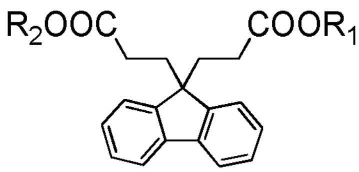

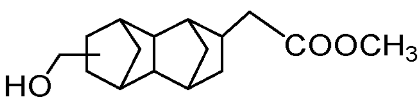
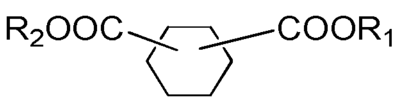

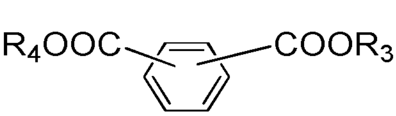
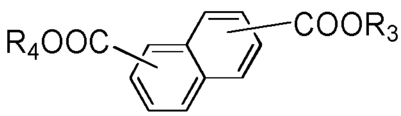

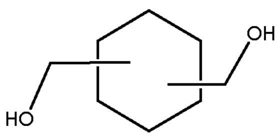

In the above formulae, $R_1$ and $R_2$ each independently represent a hydrogen atom, a methyl group, or an ethyl group, and $R_3$ and $R_4$ each independently represent a hydrogen atom, a methyl group, an ethyl group, or alkylene glycol containing 2 to 5 carbon atoms.

The polycarbonate resin of one preferred embodiment of the present invention may comprise, as impurities, an alcoholic compound that may be generated as a by-product upon the production thereof, such as a phenolic compound, or a diol component or a carbonic acid diester that has not reacted and remains, in some cases.

Such an alcoholic compound such as a phenolic compound, and such a carbonic acid diester, which are comprised as impurities, may cause a reduction in the strength of the resulting molded body or generation of odors. Accordingly, the smaller the contents of these compounds, the better.

The content of the remaining phenolic compound is preferably 3000 ppm by mass or less, more preferably 1000 ppm by mass or less, particularly preferably 300 ppm by mass or less, with respect to 100% by mass of the polycarbonate resin.

The content of the remaining diol component is preferably 1000 ppm by mass or less, more preferably 100 ppm by mass or less, and particularly preferably 10 ppm by mass or less, with respect to 100% by mass of the polycarbonate resin.

The content of the remaining carbonic acid diester is preferably 1000 ppm by mass or less, more preferably 100 ppm by mass or less, and particularly preferably 10 ppm by mass or less, with respect to 100% by mass of the polycarbonate resin.

In particular, it is preferable that the contents of compounds such as phenol and t-butyl phenol are small, and it is preferable that the contents of these compounds are within the above-described range.

The content of a phenolic compound remaining in the polycarbonate resin can be measured by a method of analyzing a phenolic compound extracted from the polycarbonate resin, using gas chromatography.

The content of an alcoholic compound remaining in the polycarbonate resin can also be measured by a method of analyzing an alcoholic compound extracted from the polycarbonate resin, using gas chromatography.

The contents of a diol component and a carbonic acid diester remaining in the polycarbonate resin can also be measured by a method of extracting these compounds from the polycarbonate resin, and then analyzing them using gas chromatography.

The contents of a by-product alcoholic compound such as a phenolic compound, a diol component, and a carbonic acid diester may be reduced to such an extent that these compounds are undetectable. However, from the viewpoint of productivity, the polycarbonate resin may comprise very small amounts of these compounds in a range in which the compounds do not impair the effects of the present invention. In addition, plasticity can be improved upon the melting of the resin, if the resin may comprise very small amounts of the compounds.

The content of the remaining phenolic compound, diol component or carbonic acid diester may each be, for example, 0.01 ppm by mass or more, 0.1 ppm by mass or more, or 1 ppm by mass or more, with respect to 100% by mass of the polycarbonate resin.

The content of the remaining alcoholic compound may be, for example, 0.01 ppm by mass or more, 0.1 ppm by mass or more, or 1 ppm by mass or more, with respect to 100% by mass of the polycarbonate resin.

Besides, the contents of the by-product alcoholic compound such as a phenolic compound, the diol component and the carbonic acid diester in the polycarbonate resin can be regulated to be within the above-described ranges by appropriately adjusting conditions for polycondensation or the setting of apparatuses. Otherwise, the contents of these compounds can also be regulated by determining conditions for an extrusion step after completion of the polycondensation.

For example, the amount of the remaining by-product alcoholic compound such as a phenolic compound is related to the type of carbonic acid diester used in the polymerization of the polycarbonate resin, the temperature applied to the polymerization reaction, the polymerization pressure, etc. By adjusting these conditions, the amount of the remaining by-product alcoholic compound such as a phenolic compound can be reduced.

For example, when the polycarbonate resin is produced using dialkyl carbonate such as diethyl carbonate, the molecular weight is hardly increased, and low-molecular-weight polycarbonate is thereby obtained, so that the content of an alcoholic compound generated as a by-product tends to be increased. Such alkyl alcohol has high volatility, and thus, if it remains in the polycarbonate resin, the moldability of the resin tends to be deteriorated. In addition, when the amount of the remaining by-product alcoholic compound such as a phenolic compound is large, it is likely that problems regarding odor occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained polycarbonate resin is preferably 3000 ppm by mass or less, with respect to the amount of the polycarbonate resin (100% by mass). The content of the remaining alcoholic compound is preferably 3000 ppm by mass or less, more preferably 1000 ppm by mass or less, and particularly preferably 300 ppm by mass or less, with respect to 100% by mass of the polycarbonate resin.

In addition to the compound represented by general formula (1), a dihydroxy compound, a dicarboxylic acid compound, a dicarboxylic acid anhydride compound, a hydroxycarboxylic acid compound, a hydroxycarboxylic acid ester

compound, a dicarboxylic acid ester compound, etc., which are generally used as structural units of polyester carbonate resin, may be contained in a raw material monomer for the polyester carbonate resin. Examples of the dihydroxy compound include the above-described aliphatic dihydroxy compound and aromatic dihydroxy compound.

That is, the polyester carbonate resin may contain structural units derived from a general dihydroxy compound, dicarboxylic acid compound, dicarboxylic acid anhydride compound, hydroxycarboxylic acid compound, hydroxycarboxylic acid ester compound, dicarboxylic acid ester compound, etc. in addition to the structural unit represented by general formula (2) derived from the compound represented by general formula (1). The copolymer having a plurality of types of structural units may be either a block copolymer or a random copolymer.

The number-average molecular weight (Mn) of the polycarbonate resin or polyester carbonate resin containing the structural unit represented by general formula (2) is about 4,000 to 100,000, and preferably about 10,000 to 50,000, the weight-average molecular weight (Mw) thereof is about 10,000 to 100,000, and preferably about 12,000 to 80,000, and the polydispersity (Mw/Mn) thereof is about 1 to 5, and preferably about 1.5 to 4.5. Further, the glass transition temperature (Tg) thereof is preferably 145 to 170°C, and more preferably 150 to 165°C.

The refractive index (nD) of the polycarbonate resin or polyester carbonate resin containing the structural unit represented by general formula (2) is relatively high, and it is preferably 1.500 to 1.650, and more preferably 1.520 to 1.630. The refractive index is a value measured by the method described in the Examples.

The Abbe number ($v_q$) of birefringence of the polycarbonate resin or polyester carbonate resin containing the structural unit represented by general formula (2) is preferably 24.0 to 40.0, and more preferably 24.5 to 38.0. The Abbe number is a value measured by the method described in the Examples.

The partial dispersion ratio (θgF) of the polycarbonate resin or polyester carbonate resin containing the structural unit represented by general formula (2) is preferably 0.621 to 0.700, and more preferably 0.625 to 0.695. Further, the extraordinary partial dispersion degree (ΔθgF) of the resin is preferably 0.025 to 0.100, and more preferably 0.030 to 0.095. The partial dispersion ratio and the extraordinary partial dispersion degree are values measured by the method described in the Examples.

In the same manner as above, the compound represented by general formula (1A) that is included in the compound represented by general formula (1) can also be polymerized solely or in combination with another monomer, thereby producing a resin containing a structural unit (structural unit (A)) represented by general formula (2A).

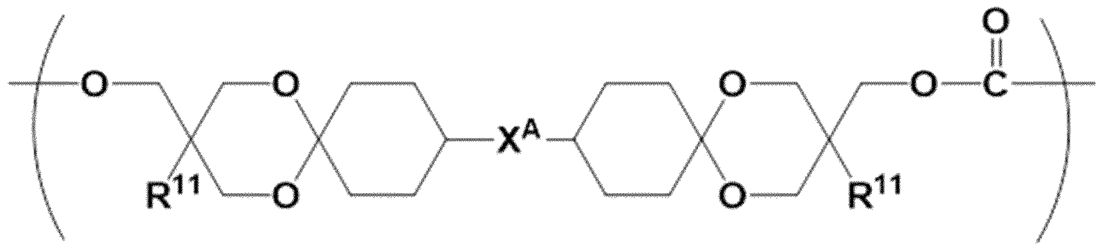

(2A)

**[In** the formula, $R^{11}$ and $X^A$ are the same as above.]

Specific examples and preferred examples of $R^{11}$ and $X^A$ in general formula (2A) are the same as those of $R^{11}$ and $X^A$ in general formula (1A) described above.

The compound represented by general formula (1) is used as a single monomer or as a copolymerization monomer to be subjected to polymerization, thereby modifying properties of the resin. For example, by adjusting the amount of the compound represented by general formula (1) and copolymerizing it with another monomer, properties such as the refractive index, glass transition temperature, and birefringence of the resin can be adjusted.

< Optical member >

The resin of the present invention can be preferably used in an optical member. In one embodiment of the present invention, an optical member comprising the resin of the present invention is provided. In one embodiment of the present invention, the optical member may include, but is not limited to, an optical disk, a transparent conductive substrate, an optical card, a sheet, a film, an optical fiber, a lens, a prism, an optical film, a substrate, an optical filter, a hard coat film, and the like. The resin of the present invention has high fluidity, and can be molded according to a cast method. Hence, the present resin is preferably used, in particular, in production of a thin optical member. In a preferred embodiment of the present invention, the optical member produced using the resin of the present invention may be an optical lens. In another preferred embodiment of the present invention, the optical member produced using the resin of the present invention may be an optical film.

When an optical member comprising the resin of the present invention is produced according to injection molding, the optical member is preferably molded under conditions of a cylinder temperature of 260°C to 350°C and a mold

temperature of 90°C to 170°C. The optical member is more preferably molded under conditions of a cylinder temperature of 270°C to 320°C and a mold temperature of 100°C to 160°C. When the cylinder temperature is higher than 350°C, the resin is decomposed and colored. On the other hand, when the cylinder temperature is lower than 260°C, the melt viscosity becomes high, and it easily becomes difficult to mold the optical member. Moreover, when the mold temperature is higher than 170°C, it easily becomes difficult to remove a molded piece consisting of the resin from a mold. On the other hand, when the mold temperature is lower than 90°C, the resin is hardened too quickly in a mold upon the molding thereof, and it becomes difficult to control the shape of a molded piece, or it easily becomes difficult to sufficiently transcribe a vehicle placed in a mold.

< Optical lens >

In one embodiment of the present invention, the resin can be preferably used in an optical lens. Since the optical lens produced using the resin of the present invention has a high refractive index and is excellent in terms of heat resistance, it can be used in fields in which expensive glass lenses having a high refractive index have been conventionally used, such as telescopes, binoculars and TV projectors, and thus, the optical lens produced using the present resin is extremely useful.

For instance, regarding a lens used for smart phones, a lens molded from a thermoplastic resin comprising the constituent unit (A) is overlapped with a lens molded from a resin comprising the constituent unit represented by any one of the formulae (II-1) to (II-4) or a resin comprising a constituent unit derived from a monomer represented by any one of the following formulae, so that the lenses can be used as a lens unit:

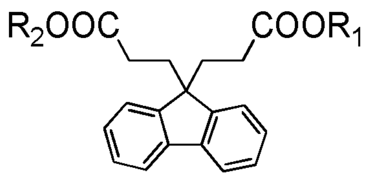

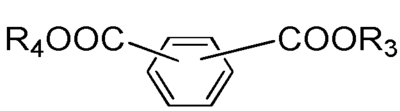

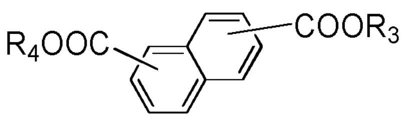

wherein $R_1$ and $R_2$ each independently represent a hydrogen atom, a methyl group or an ethyl group, and $R_3$ and $R_4$ each independently represent a hydrogen atom, a methyl group, an ethyl group or alkylene glycol containing 2 to 5 carbon atoms.

The optical lens of the present invention is preferably used in the shape of an aspherical lens, as necessary. Since the aspherical lens can reduce spherical aberration to substantially zero with a single lens thereof, it is not necessary to eliminate the spherical aberration by a combination of a plurality of spherical lenses, and thereby, it becomes possible to achieve weight saving and a reduction in production costs. Therefore, among the optical lenses, the aspherical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the central portion is preferably 0.05 to 3.0 mm, more preferably 0.05 to 2.0 mm, and further preferably 0.1 to 2.0 mm. In addition, the diameter is preferably 1.0 mm to 20.0 mm, more preferably 1.0 to 10.0 mm, and further preferably, 3.0 to 10.0 mm. Further, regarding the shape thereof, the optical lens of the present invention is preferably a meniscus lens, in which one surface is a convex, and the other surface is a concave.

The optical lens of the present invention is molded according to any given method such as die molding, cutting, polishing, laser machining, electrical discharge machining, or etching. Among these methods, die molding is more preferable in terms of production costs.

<Optical Film>

In one embodiment of the present invention, the resin can be suitably used for an optical film. In particular, an optical film produced by using the polycarbonate resin of the present invention has excellent transparency and heat resistance, and therefore is suitably used for a film for liquid crystal substrates, an optical memory card, etc.

Note that the "sheet" generally refers to a thin and flat product whose thickness is small considering the length and width thereof, and the "film" refers to a thin and flat product whose thickness is extremely small considering the length and

width thereof, wherein the maximum thickness is arbitrarily limited, which is usually supplied in the form of a roll. However, in this specification, the "sheet" is not clearly distinguished from the "film", and these terms are used as the same meaning.

The optical film formed from the resin of the present invention has good heat resistance and color phase. For example, the resin composition is dissolved in an organic solvent such as methylene chloride, tetrahydrofuran and dioxane to form a casting film, and a gas barrier film and a solvent-resistant film are attached to both the surfaces of the casting film or the casting film is used together with a transparent conductive film and a polarization plate, and the film is suitably used as a film for liquid crystal substrates (Placcel substrate) or a film for liquid crystal displays such as a phase difference film. Specifically, the film can be advantageously used for tablets, smartphones, handy terminals, various display devices, etc.

In order to avoid mixing of a foreign material in the optical film as much as possible, the molding environment must be a low-dust environment, and it is preferably Class 6 or lower, and more preferably Class 5 or lower.

The optical film of the present invention is preferably transparent, and preferably, the haze value is 3% or less and the total light transmittance is 85% or more. The stretching ratio in the stretching process may be optionally set, but it is preferably 1.1 to 5 times, and more preferably 1.2 to 3 times. Relative to the glass transition temperature (Tg), the stretching temperature is preferably in the range of Tg-30°C to Tg+50°C, and more preferably Tg-20°C to Tg+30°C. The thickness of the optical film is 1 to 200 μm, preferably 10 to 150 μm, and more preferably 15 to 100 μm.

When the optical film of the present invention is used as a phase difference film, the viewing angle can be improved by controlling the refractive indexes in the X-axis, Y-axis, and Z-axis directions by means of uniaxial stretching, biaxial stretching or the like. Further, desired optical characteristics can be obtained by using a plurality of the optical films.

The application of the optical film of the present invention is not particularly limited as long as the optical film is applied in a field in which characteristics thereof can be utilized. For example, the optical film is suitably used in optical apparatuses such as liquid crystal display devices, organic or inorganic electroluminescent elements, plasma displays, CRTs, liquid crystal projectors, optical pickup optical systems in optical recording/reproduction apparatuses, touch panels, and antireflection films.

## EXAMPLES

Hereinafter, the present invention will be specifically described by way of examples, but the present invention is not limited thereto. In the examples, measurement values of the cyclic diol compound were measured using the below-described methods. Further, a reagent was used for a compound not specifically mentioned.

-Synthesis of Cyclic Diol Compound-

<Analysis by Gas Chromatography (GC)>

The purity of the cyclic diol compound was obtained by the area percentage method, performing gas chromatography (GC) analysis using the below-described conditions and method.
50 ml of methanol was added to 0.5 g of the cyclic diol compound, and the mixture was shaken up at room temperature to prepare a methanol solution of the cyclic diol compound, and it was used as a sample for analysis.

[Measurement Conditions]

Equipment: GC-2020 manufactured by Shimadzu Corporation
Column: DB-1 manufactured by Agilent Technologies, Inc., 30 m x 0.25 mm x 0.25 μm
Column temperature: 80°C (holding time: 5 min)-temperature raising rate of 10°C/min-320°C (holding time: 5 min)
Injection temperature/detector temperature: 300°C/325°C
Split ratio: 30
Column flow rate: 1.17 ml/min
Purge flow rate: 10.0 ml/min
Detector: FID
Carrier gas: helium
Gas linear velocity: 30 cm/sec
Injection amount: 1 μl

<Infrared Absorption Spectrum (IR Spectrum)>

The IR spectrum of the cyclic diol compound was measured by the ATR method (attenuated total reflection

method) using an infrared spectrometer (Spectrum 400 manufactured by PerkinElmer Japan Co., Ltd.).

<Proton Nuclear Magnetic Resonance Spectrum ($^1$H-NMR)>

$^1$H-NMR of the cyclic diol compound was measured by dissolving it in a deuterated solvent (deuterated chloroform or deuterated dimethyl sulfoxide) and then using a nuclear magnetic resonance apparatus (AVIII-400 manufactured by Bruker, $^1$H-NMR (400 MHz)).

Note that a peak of water may be seen in the case of the solvent used for $^1$H-NMR measurement. A peak derived from water contained in deuterated chloroform exists at around 1.56 ppm, and a peak derived from water contained in deuterated dimethyl sulfoxide exists at around 3.33 ppm. Further, a peak derived from residual proton contained in deuterated chloroform exists at around 7.27 ppm, and a peak derived from residual proton contained in deuterated dimethyl sulfoxide exists at around 2.50 ppm.

[Synthesis Example 1]

To a 1000 ML four-neck flask equipped with a stirrer, a thermometer, and a Dean-Stark apparatus with a cooling tube, 25.2 g (0.1 mol) of 4,4'-bicyclohexanone, 0.63 g of p-toluenesulfonic acid monohydrate (manufactured by NACALAI TESQUE, INC.), 32.8 g (0.27 mol) of trimethylolethane (manufactured by Tokyo Chemical Industry Co., Ltd.), 300 ml of xylene, and 100 g of N-methyl-2-pyrrolidone were added, and then the temperature was raised, and under reflux conditions, the mixture was stirred for about 3 hours while removing water produced.

After the reaction was completed, about 250 g of xylene was distilled off under reduced pressure conditions. The reaction product was cooled to 90°C and neutralized with 10.35 g of 3.4 wt% aqueous solution of sodium carbonate, and then 250 g of ion-exchanged water (90°C) was added thereto, and the mixture was cooled to 25°C. The generated crystal was separated by filtration, and the obtained crystal was firstly rinsed once with 200 g of ion-exchanged water, and then rinsed once with 50 g of isopropyl alcohol. The wet crystal was dried at 100°C under reduced pressure, thereby obtaining 40.1 g (0.10 mol) of 4,4'-bicyclohexanone trimethylolethane diacetal with a purity of 98.1% (GC area percentage). Hereinafter, 4,4'-bicyclohexanone trimethylolethane diacetal is referred to as Compound 1.

The IR spectrum and $^1$H-NMR spectrum of the obtained Compound 1 were measured. The results are shown in Figures 1 and 2.

(Compound 1)

IR ($cm^{-1}$): 674, 901, 932, 987, 1005, 1026, 1047, 1086, 1097, 1207, 1371, 2860, 2939, 3390

[Synthesis Example 2] (Production Method of Compound 2)

2,2-bis(4-oxocyclohexyl)propane-bis(trimethylolethane acetal) (Compound 2) was synthesized according to Example 1 of Japanese Laid-Open Patent Publication No. 2019-14711 (Patent Document 5).

-Synthesis of Polycarbonate Resin-

<Refractive Index (nD)>

Based on JIS B 7071-2:2018, a V-block was obtained by molding a polycarbonate resin and used as a test piece. The refractive index was measured at 23°C using a refractometer (KPR-3000 manufactured by Shimadzu Corporation).

<Abbe Number (ν)>

Using the same test piece (V-block) as that used for the measurement of the refractive index, refractive indexes at wavelengths of 486 nm, 589 nm and 656 nm were measured at 23°C using the refractometer, and the Abbe number was calculated using the below-described formula.

$$\nu=(nD-1)/(nF-nC) \dots \text{formula (a)}$$

nD: refractive index at a wavelength of 589 nm
nC: refractive index at a wavelength of 656 nm
nF: refractive index at a wavelength of 486 nm

<Partial Dispersion Ratio (θgF)>

In addition to nC, nD, and nF described above (the values of the refractive indexes for D-line, C-line, and F-line), the value of the refractive index for g-line was measured in the same way. The partial dispersion ratio θgF was calculated according to formula (b) below.

$$\theta gF=(ng\text{-}nF)/(nF\text{-}nC)\ \ldots\ \text{formula (b)}$$

In formula (b), nC represents the value of the refractive index measured with respect to C-line, nF represents the value of the refractive index measured with respect to F-line, and ng represents the value of the refractive index measured with respect to g-line.

<Extraordinary Partial Dispersion Degree (ΔθgF)>

The value of the extraordinary partial dispersion degree (ΔθgF) was calculated based on the Abbe number (v) and the value of the partial dispersion ratio (θgF) which were calculated according to formula (a) and formula (b) above, respectively. Firstly, a graph in which the value of the Abbe number (v) was plotted on the X-axis and the value of the partial dispersion ratio (θgF) was plotted on the Y-axis was created. Further, a straight line connecting two points having coordinates of (v, θgF) regarding optical glass, i.e.: a point of NSL7 (v=60.5, θgF=0.5436, manufactured by OHARA Inc.) as a reference dispersion glass selected from normal optical glasses that do not exhibit extraordinary dispersibility; and a point of PBM2 (v=36.3, θgF=0.5828, manufactured by OHARA Inc.) as another reference dispersion glass selected from normal optical glasses that do not exhibit extraordinary dispersibility, was added to the graph. Finally, a point of the polycarbonate resin having coordinates of (v, θgF) was also added to the graph, and the difference between the value of θgF of the point of the polycarbonate resin and the above-described straight line in the Y-axis direction was calculated as the extraordinary partial dispersion degree (or the value of ΔθgF).

Specifically, the value of ΔθgF was calculated as described below. The above-described straight line connecting the two points of the reference dispersion glasses is represented by formula (c) below, and in formula (c), v0 represents the Abbe number of the point on the straight line, and θgF0 represents the value of the partial dispersion ratio of the point on the straight line.

$$\theta gF0=0.001618\times v0+0.6415\ \ldots\ \text{formula (c)}$$

Further, the value of ΔθgF of the polycarbonate resin was calculated based on formula (d) below. In formula (d), the Abbe number of the polycarbonate resin obtained from formula (a) above is represented by v, and the partial dispersion ratio of the polycarbonate resin obtained from formula (b) above is represented by θgF.

$$\Delta\theta gF=\theta gF\text{-}\theta gF0=\theta gF\text{-}(\text{-}0.001618\times v+0.6415)\ \ldots\ \text{formula (d)}$$

As described above, the value of ΔθgF of the resin is an index of extraordinary dispersibility corresponding to the distance between the straight line connecting the points of NSL7 and PBM2 and the plotted point of the resin, and it indicates how much blue light (or short-wavelength light) is refracted by the resin. The higher the value of ΔθgF is, the more the resin refracts blue light, and when the resin has a high value of ΔθgF, an optical element containing the resin efficiently corrects chromatic aberration and realizes clear images.

<Glass Transition Temperature (Tg)>

Based on JIS K7121-1987, the measurement was carried out with a temperature raising program of 10°C/min using a differential scanning calorimeter (X-DSC7000 manufactured by Hitachi High-Tech Science Corporation).

(Example 1)

As raw materials, 21.9326 g (0.0500 mol) of 9,9-bis[4-(2-hydroxyethoxy)phenyl]fluorene (BPEF, manufactured by Tokyo Chemical Industry Co., Ltd.) represented by structural formula below, 8.5445 g (0.0214 mol) of 4,4'-bicyclohexanone trimethylolethane diacetal (also known as (3,3'-dimethyl-1,1',5,5'-tetraoxa[9,9'-bispiro[5.5]undecane]-3,3'-diyl) dimethanol) that is Compound 1 obtained in Synthesis Example 1 above, 15.6891 g (0.0732 mol) of diphenyl carbonate (DPC, manufactured by Tokyo Chemical Industry Co., Ltd.), and $0.6003\times10^{-4}$ g ($0.7146\times10^{-6}$ mol) of sodium hydrogen carbonate were put in a 300 mL reactor equipped with a stirrer and a distillation apparatus, and the inside of the system was

set to be under nitrogen atmosphere of 101.3 kPa. The reactor was immersed in an oil bath heated to 200°C to start a transesterification reaction. 5 minutes after the initiation of the reaction, stirring was started, and 20 minutes later, the pressure was reduced from 101.3 kPa to 26.66 kPa over 10 minutes. The temperature was increased to 210°C while reducing the pressure, and increased to reach 220°C 60 minutes after the initiation of the reaction. 80 minutes after the initiation of the reaction, the pressure was reduced to 20.00 kPa over 10 minutes, and the temperature was raised to 240°C while the pressure was reduced to 0 kPa, and after maintaining the conditions for 30 minutes, nitrogen gas was introduced into the reaction system and the pressure was recovered to 101.3 kPa, thereby obtaining a polycarbonate resin. Physical properties of the obtained resin are shown in Table 1.

(Examples 2 to 8 and Comparative Examples 1 and 2)

A polycarbonate resin was obtained in a manner similar to that in Example 1, except that the materials shown in Table 1 were used as raw materials in the amounts shown in Table 1. The composition and physical properties of the obtained resin are shown in Table 1.

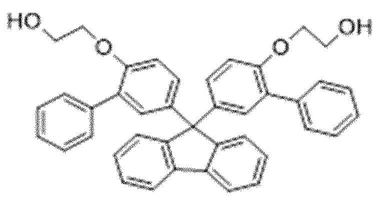

BPPEF (9,9-bis(4-(2-hydroxyethoxy)-3-phenylphenyl)fluorene)

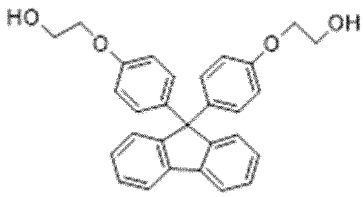

BPEF

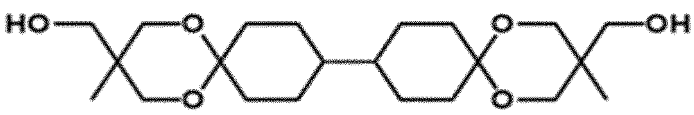

Compound 1

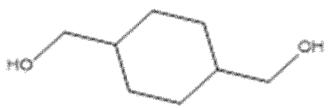

CHDM (cyclohexanedimethanol)

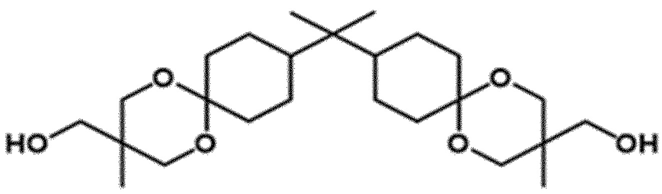

Compound 2

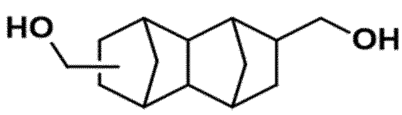

D-NDM (decahydro-1,4:5,8-dimethanonaphthalene diol)

[Table 1]

| | Raw materials (mol%) | | | | | | Physical properties | | | | |
|---|---|---|---|---|---|---|---|---|---|---|---|
| | Compound 1 | Compound 2 | D-NDM | BPEF | BPPEF | CHDM | Refractive index (nD) | Abbe number (ν) | θgF | ΔθgF | Tg |
| Example 1 | 30 | 0 | 0 | 70 | 0 | 0 | 1.598 | 27.7 | 0.635 | 0.038 | 152 |
| Example 2 | 30 | 0 | 0 | 0 | 70 | 0 | 1.618 | 24.9 | 0.673 | 0.072 | 159 |
| Example 3 | 63 | 0 | 0 | 37 | 0 | 0 | 1.552 | 35.4 | 0.625 | 0.041 | 161 |
| Example 4 | 63 | 0 | 0 | 0 | 19 | 18 | 1.541 | 37.4 | 0.626 | 0.045 | 154 |
| Example 5 | 0 | 30 | 0 | 70 | 0 | 0 | 1.595 | 28.0 | 0.647 | 0.051 | 153 |
| Example 6 | 0 | 30 | 0 | 0 | 70 | 0 | 1.614 | 25.2 | 0.692 | 0.091 | 160 |
| Example 7 | 0 | 61 | 0 | 39 | 0 | 0 | 1.551 | 35.4 | 0.673 | 0.089 | 161 |
| Example 8 | 0 | 61 | 0 | 0 | 20 | 19 | 1.540 | 37.5 | 0.675 | 0.094 | 154 |
| Comparative Example 1 | 0 | 0 | 30 | 70 | 0 | 0 | 1.618 | 26.3 | 0.620 | 0.021 | 142 |
| Comparative Example 2 | 0 | 0 | 62 | 0 | 19 | 19 | 1.574 | 34.2 | 0.587 | 0.001 | 128 |

According to the results in Table 1, when Example 1 is compared to Example 2, Example 3 is compared to Example 4, Example 5 is compared to Example 6, and Example 7 is compared to Example 8, respectively, it is understood that θgF and ΔθgF of the resin obtained from the monomer represented by general formula (1) and the compound other than BPEF are higher than those of the resin obtained from the monomer represented by general formula (1) and BPEF. Accordingly, in the present invention, an aspect in which the resin consisting of (consisting only of) the structural unit (A) derived from the monomer represented by general formula (1) and the structural unit derived from BPEF is excluded is more preferred.

INDUSTRIAL APPLICABILITY

According to the present invention, it is possible to provide a resin excellent in heat resistance, also excellent in optical characteristics such as the refractive index and the Abbe number, and further excellent in the partial dispersion ratio (θgF) and the extraordinary partial dispersion degree (ΔθgF). Accordingly, the resin is suitably used for optical members such as optical lenses, optical films, and optical sheets.

## Claims

1. A resin which comprises a structural unit (A) derived from a monomer represented by general formula (1) and which is a polycarbonate resin or a polyester carbonate resin:

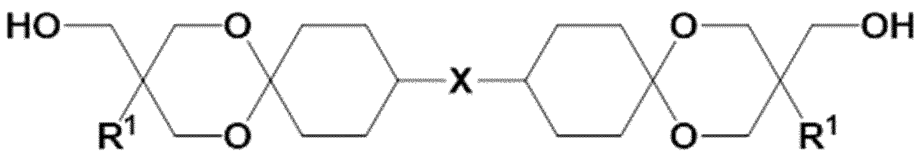

(1)

wherein in the formula:

each $R^1$ is independently a hydrogen atom, a C1-4 alkyl group, or a phenyl group; and
X is a direct bond or a divalent group that is represented by formula (Y):

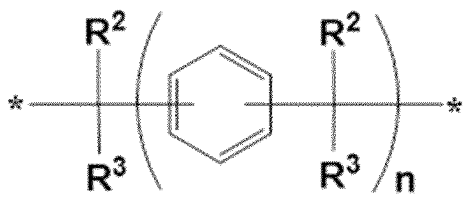

(Y)

wherein in the formula:

each $R^2$ and each $R^3$ are independently a hydrogen atom, an alkyl group, or an aryl group, or each $R^2$ and each $R^3$ may bind to one another to form a ring together with an adjacent carbon atom, and the ring may be substituted with an alkyl group;
n is 0 or 1; and

* represents a binding position.

2. The resin according to claim 1, wherein in the divalent group represented by formula (Y):

when n is 0, each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group; and
when n is 1, each $R^2$ and each $R^3$ are independently a hydrogen atom or a C1-6 alkyl group.

3. The resin according to claim 2, wherein in the divalent group represented by formula (Y):

n is 0; and

each $R^2$ and each $R^3$ are independently a hydrogen atom, a C1-6 alkyl group, or a phenyl group, or each $R^2$ and each $R^3$ may bind to one another to form a 5 to 12-membered ring together with an adjacent carbon atom, and the ring may be substituted with a C1-3 alkyl group.

**4.** The resin according to claim 3, wherein:

each $R^1$ is independently a hydrogen atom, a methyl group, or an ethyl group; and
in the divalent group represented by formula (Y),
n is 0, and each $R^2$ and each $R^3$ are independently a hydrogen atom or a C1-4 alkyl group.

**5.** The resin according to claim 4, wherein:

each $R^1$ is independently a hydrogen atom, a methyl group, or an ethyl group; and
X is a direct bond.

**6.** The resin according to any one of claims 1 to 5, which comprises a structural unit (B) derived from a monomer represented by general formula (6) and/or a structural unit (C) derived from a monomer represented by general formula (7):

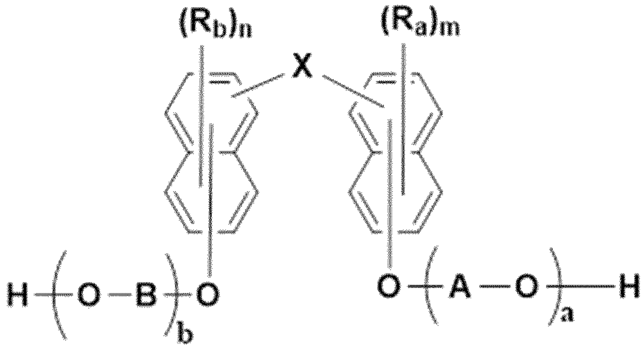

(6)

wherein in general formula (6):

$R_a$ and $R_b$ are each independently selected from the group consisting of a hydrogen atom;
a halogen atom; a substituted or unsubstituted alkyl group having 1 to 20 carbon atoms;
a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms, which contains at least one heterocyclic atom selected from O, N and S; a substituted or unsubstituted aryloxy group having 6 to 20 carbon atoms; and $-C{\equiv}C-R_h$;
$R_h$ represents a substituted or unsubstituted aryl group having 6 to 20 carbon atoms, or a substituted or unsubstituted heteroaryl group having 6 to 20 carbon atoms which contains at least one heterocyclic atom selected from O, N and S;
X represents a single bond or a substituted or unsubstituted fluorene group;
A and B each independently represent a substituted or unsubstituted alkylene group having 1 to 5 carbon atoms;
m and n each independently represent an integer of 0 to 6; and
a and b each independently represent an integer of 0 to 10,

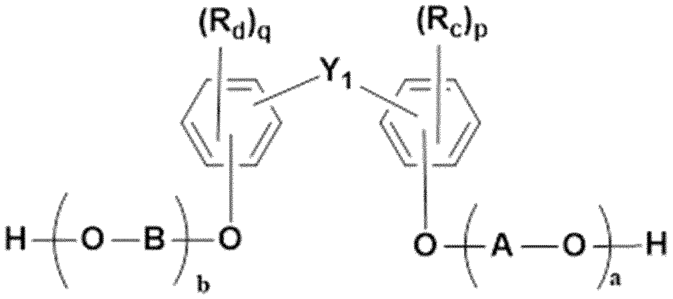

(7)

wherein in general formula (7):

$R_c$ and $R_a$ are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;

$Y_1$ represents a single bond, a substituted or unsubstituted fluorene group, or any one of structural formulae represented by formulae (8) to (14):

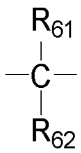

(8)

$-S-$

(9)

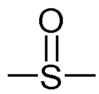

(10)

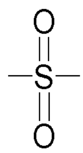

(11)

$-(CH_2)_r-$

(12)

$-O-$

(13)

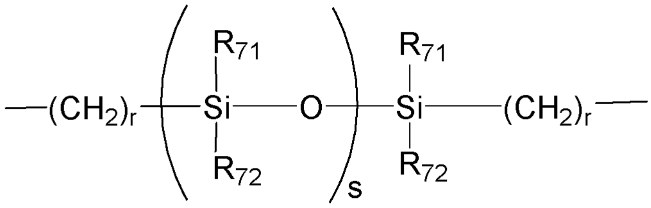

(14)

wherein in formulae (8) to (14):

$R_{61}$, $R_{62}$, $R_{71}$ and $R_{72}$ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein $R_{61}$ and $R_{62}$, or $R_{71}$ and $R_{72}$, bind to one another, and
r and s each independently represent an integer of 0 to 5000;

A and B each independently represent a substituted or unsubstituted alkylene group having 1 to 5 carbon atoms;
p and q each independently represent an integer of 0 to 4; and
a and b each independently represent an integer of 0 to 10.

**7.** A resin which comprises a structural unit (A) derived from a monomer represented by general formula (1A):

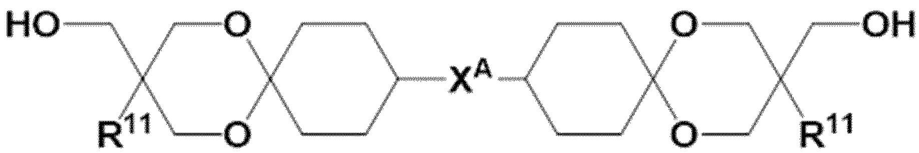

**(1A)**

wherein in the formula:

each $R^{11}$ is independently a hydrogen atom, a methyl group, or an ethyl group; and
$X^A$ is a direct bond or a divalent group that is represented by formula (Y1):

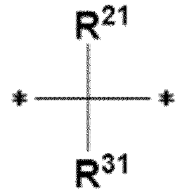

(Y1)

wherein in the formula:

one of $R^{21}$ and $R^{31}$ is a hydrogen atom and the other is a hydrogen atom or a methyl group, or $R^{21}$ and $R^{31}$ may bind to one another to form a 6-membered ring together with an adjacent carbon atom, and the ring may be substituted with 1 to 3 methyl groups; and

* represents a binding position.

**8.** The resin according to claim 7, which is a polycarbonate resin, a polyester carbonate resin, or a polyester resin.

**9.** The resin according to any one of claims 1 to 8, wherein the polystyrene-equivalent weight-average molecular weight (Mw) of the resin is 10,000 to 100,000.

**10.** The resin according to any one of claims 1 to 9, wherein the refractive index (nD) of the resin is 1.500 to 1.650.

**11.** The resin according to any one of claims 1 to 10, wherein the Abbe number (v) of the resin is 24.0 to 40.0.

**12.** The resin according to any one of claims 1 to 11, wherein the glass transition temperature of the resin is 145 to 170°C.

**13.** The resin according to any one of claims 1 to 12, wherein the partial dispersion ratio (θgF) of the resin is 0.621 to 0.700.

**14.** The resin according to any one of claims 1 to 13, wherein the extraordinary partial dispersion degree (ΔθgF) of the resin is 0.025 to 0.100.

**15.** An optical lens comprising the resin according to any one of claims 1 to 14.

[Figure 1]

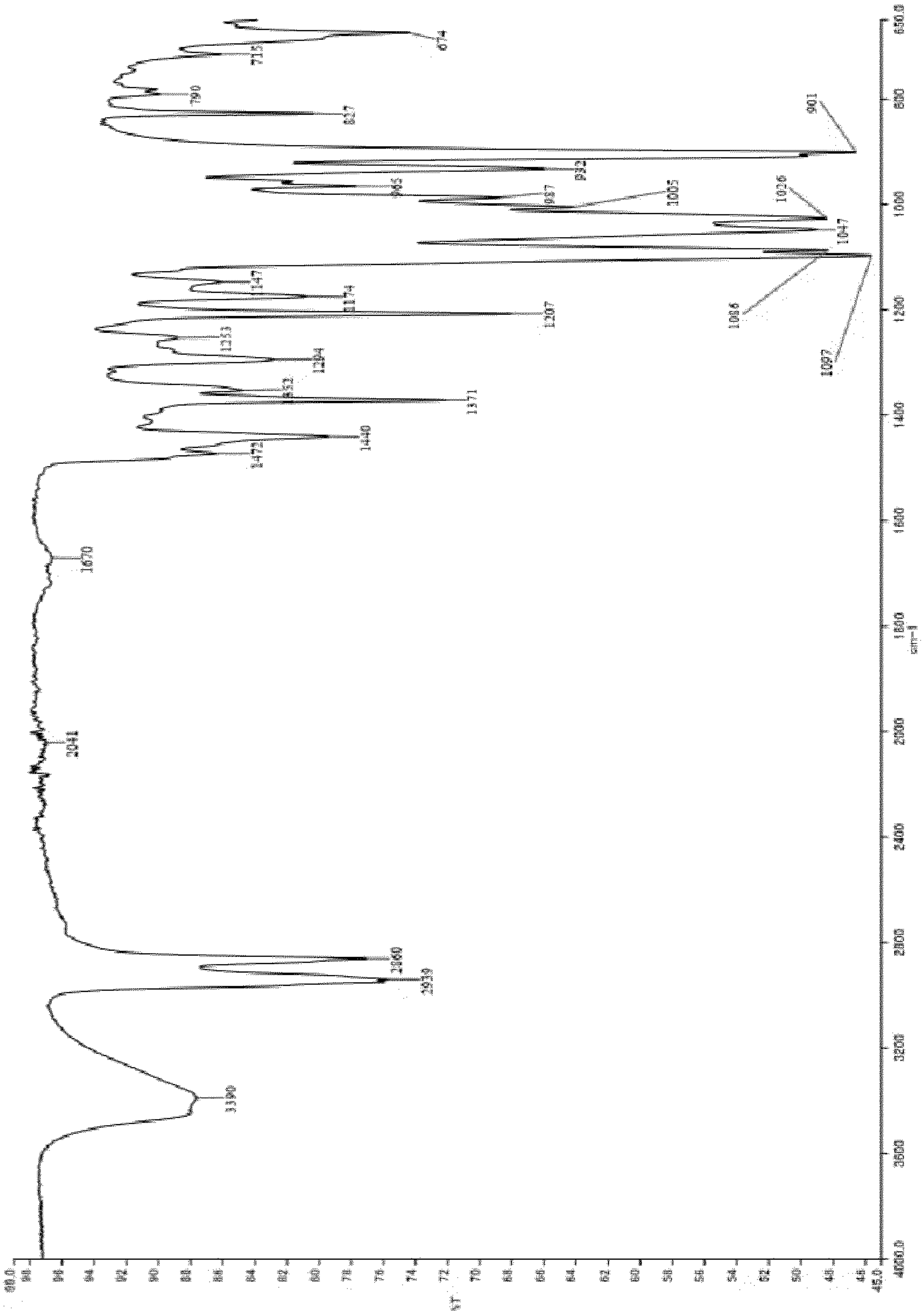
%T
cm-1
3390
2939
2860
2041
1670
1472
1440
1371
1284
1233
1207
1174
1147
1097
1066
1047
1026
1005
987
965
932
901
827
790
713
674

[Figure 2]

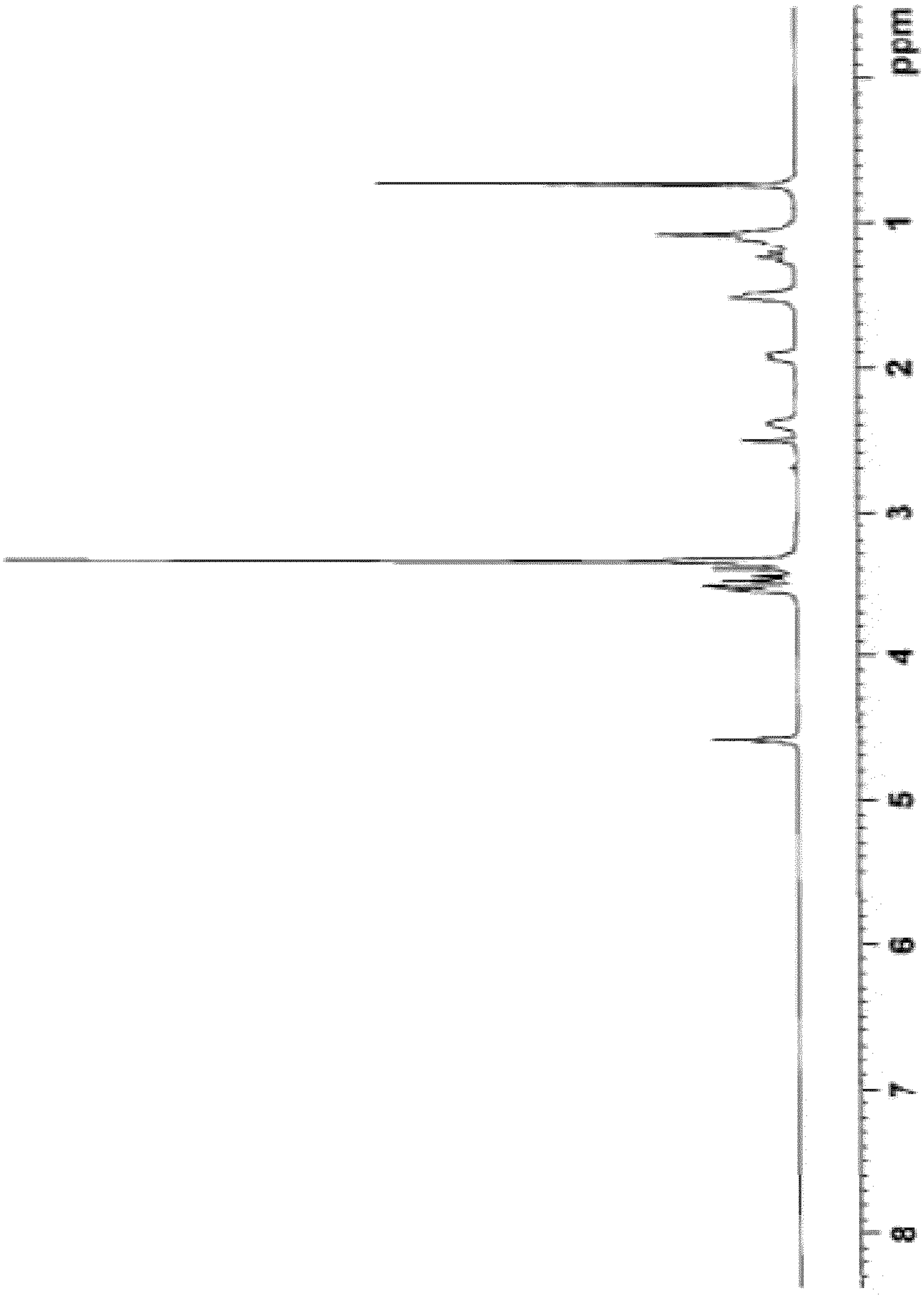

## INTERNATIONAL SEARCH REPORT

International application No. **PCT/JP2023/026497**

**A. CLASSIFICATION OF SUBJECT MATTER**

***C08G 64/02***(2006.01)i; ***C08G 63/672***(2006.01)i; ***G02B 1/04***(2006.01)i
FI: C08G64/02; C08G63/672; G02B1/04

According to International Patent Classification (IPC) or to both national classification and IPC

**B. FIELDS SEARCHED**

Minimum documentation searched (classification system followed by classification symbols)

C08G63/00-C08G64/42; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2021-134151 A (MITSUBISHI GAS CHEMICAL CO) 13 September 2021 (2021-09-13) claims, examples, paragraph [0064] | 1-4, 7-15<br><br>5-6 |
| P, X | WO 2023/074439 A1 (TEIJIN LTD) 04 May 2023 (2023-05-04) claims, examples | 1-4, 6-15 |
| A | JP 2019-014711 A (NEW JAPAN CHEM CO LTD) 31 January 2019 (2019-01-31) entire text | 1-15 |
| A | JP 2011-148942 A (TEIJIN CHEMICALS LTD) 04 August 2011 (2011-08-04) entire text | 1-15 |
| A | JP 2022-011687 A (TEIJIN LTD) 17 January 2022 (2022-01-17) entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026497**

| Patent document cited in search report | Publication date (day/month/year) | Patent family member(s) | Publication date (day/month/year) |
|---|---|---|---|
| JP 2021-134151 A | 13 September 2021 | (Family: none) | |
| WO 2023/074439 A1 | 04 May 2023 | (Family: none) | |
| JP 2019-014711 A | 31 January 2019 | (Family: none) | |
| JP 2011-148942 A | 04 August 2011 | (Family: none) | |
| JP 2022-011687 A | 17 January 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012214803 A
- JP 2013001867 A
- WO 2018074305 A
- JP 2021134151 A
- JP 2019014711 A